# EUROPÄISCHE PATENTANMELDUNG

(11) **EP 1 416 724 A1**
(43) Veröffentlichungstag der Anmeldung: **06.05.2004**
(21) Anmeldenummer: 03021610.5
(22) Anmeldetag: 25.09.2003
(51) Int. Cl.: H04N 5/225

(54) **Überwachungseinrichtung und Dome Control Modul**

(30) Priorität: 31.10.2002 DE 10250659
(71) Anmelder: Valeo Schalter und Sensoren GmbH, 74321 Bietigheim-Bissingen (DE)
(72) Erfinder: Cywinski, Thorsten, 71691 Freiberg (DE); Benz, Jürgen, 74354 Besigheim (DE); Fernandes, Ernani M., 74321 Bietigheim-Bissingen (DE)
(74) Vertreter: Dreiss, Fuhlendorf, Steimle & Becker

(57) **Zusammenfassung**

Die Erfindung betrifft eine Überwachungseinrichtung, insbesondere zur Überwachung der Position eines Fahrzeuges relativ zu einer Fahrbahn, mit einer Leiterplatte, mit einem auf der Leiterplatte angeordneten Image-Chip und mit einer die von einem Überwachungsbereich reflektierten optischen Strahlen auf den Image-Chip bündelnden Optik, wobei die Optik eine dem Image-Chip abgewandte Einfallseite und eine dem Image-Chip zugewandte Ausfallseite aufweist.

Die Erfindung kennzeichnet sich dadurch, dass die Mittelebene der Einfallseite mit der Mittelebene der Ausfallseite einen Winkel einschließt, der ungleich Null ist.

## Beschreibung

Die Erfindung betrifft eine Überwachungseinrichtung, insbesondere zur Überwachung der Position eines Fahrzeuges relativ zu einer Fahrbahn, mit einer Leiterplatte, mit einem auf der Leiterplatte angeordneten Image-Chip und mit einer die von einem Überwachungsbereich reflektierten optischen Strahlen auf den Image-Chip bündelnden Optik, wobei die Optik eine dem Image-Chip abgewandte Einfallseite und eine dem Image-Chip zugewandte Ausfallseite aufweist. Derartige Überwachungseinrichtungen werden auch als LDWS (Lane Departure Warning System) bezeichnet und finden insbesondere in Lastkraftwägen Verwendung. Dabei wird die vor dem Fahrzeug liegende Fahrbahn erfasst. Insbesondere werden die Fahrbahnbegrenzungslinien detektiert. Überfährt das Fahrzeug die Fahrbahnbegrenzungslinie, ohne dass der Fahrzeuglenker ein Signal zum Spurwechsel gesetzt hat, wird beispielweise ein Warnsignal an den Fahrzeuglenker gegeben. Derartige Überwachungseinrichtungen überwachen folglich die Position des Fahrzeuges relativ zu einer Fahrbahn.

Aufgrund der Verwendung des auf der Leiterplatte angeordneten Image-Chips ist es möglich, die Überwachungseinrichtungen relativ klein auszuführen. So sind beispielsweise Überwachungseinrichtungen realisierbar, die die Größe einer Zigarettenschachtel aufweisen.

Allerdings hat sich als problematisch herausgestellt, die Überwachungseinrichtungen innerhalb des Fahrzeuges anzuordnen. Aufgrund der Verwendung des Image-Chips und einer den Image-Chip abdeckenden Optik kann die Überwachungseinrichtung, nicht beliebig im Fahrzeug positioniert werden. Bei den bekannten Überwachungseinrichtungen verläuft die Haupteinfallsrichtung der in die Einfallseite einfallenden Strahlen senkrecht zur Oberfläche des Image-Chips, und damit senkrecht zur Oberfläche der Leiterplatte. Dies hat den Nachteil, dass die Überwachungseinrichtung nicht an beliebiger Stelle innerhalb des Fahrzeuges, und insbesondere im Bereich der Windschutzscheibe des Fahrzeuges, angeordnet werden kann. Deshalb wird beim bekannten Stand der Technik das Aussehen der Innenausstattung des Fahrzeuges durch das Vorsehen einer Überwachungseinrichtung negativ beeinträchtigt. Bekannte Überwachungseinrichtungen können nur sehr aufwändig im Bereich der Windschutzscheibe angeordnet werden, ohne dass das Design der Innenausstattung negativ beeinträchtigt wird.

Der vorliegenden Erfindung liegt deshalb die Aufgabe zugrunde, eine Überwachungseinrichtung der eingangs genannten Art so fortzubilden, dass die Überwachungseinrichtung im Fahrzeug angeordnet werden kann, möglichst ohne das Aussehen der Innenausstattung des Fahrzeuges zu beeinträchtigen.

Diese Aufgabe wird bei einer eingangs genannten Überwachungseinrichtung dadurch gelöst, dass die Mittelebene der Einfallseite mit der Mittelebene der Ausfallseite der Optik einen Winkel einschließt, der ungleich Null ist. Entsprechend ist die Mittelebene der Einfallseite nicht parallel zur Oberfläche des Image-Chips. Außerdem wird die genannte Aufgabe dadurch gelöst, dass die Haupteinfallsrichtung der in die Einfallseite einfallenden Strahlen und die senkrecht zur Oberfläche des Image-Chips verlaufende Richtung einen Winkel einschließen, der ungleich Null ist. Folglich ist der Winkel zwischen der optischen Achse der Einfallseite und der senkrecht zur Oberfläche des Image-Chips verlaufenden Richtung von Null verschieden.

Hierdurch wird erreicht, dass die Überwachungseinrichtung, und insbesondere die Leiterplatine, in einer vorteilhaften Lage im Fahrzeug verbaut werden kann. Je nach Lage der Leiterplatte, und damit nach Lage des Image-Chips, wird der Winkel zwischen der Mittelebene der Einfallseite und Mittelebene der Ausfallseite der Optik, beziehungsweise der Winkel zwischen der Haupteinfallsrichtung und der zu der Oberfläche des Image-Chips senkrecht verlaufenden Richtung, verschieden sein. Durch die Erfindung ist es beispielsweise denkbar, die Leiterplatine parallel zur Fahrbahn beziehungsweise parallel zum Fahrzeughimmel anzuordnen. Über die entsprechende Optik werden die aus dem Überwachungsbereich einfallenden Strahlen, deren Haupteinfallsrichtung nicht parallel zur Fahrbahn verlaufen, auf den Image-Chip umgelenkt. Durch die Erfindung wird folglich eine größere Flexibilität beim Design der Leiterplatte und beim Einbau der Überwachungseinrichtung in das Fahrzeug ermöglicht.

Bei einer vorteilhaften Ausgestaltung der Erfindung liegt der Winkel vorzugsweise zwischen 60° und 150°. Je nach Anordnung der Leiterplatte innerhalb des Fahrzeuges und je nach Fahrzeugtyp kann der Winkel entsprechend variieren.

Eine vorteilhafte Überwachungseinrichtung ergibt sich dann, wenn die Optik ein Gehäuse und optische Elemente umfasst. Das Gehäuse deckt hierbei vorteilhafterweise den Image-Chip vollständig ab, so dass kein Streulicht den Image-Chip negativ beeinflussen kann.

Als optische Elemente können vorzugsweise eine oder mehrere Linsen, Prismen und/oder Spiegel Verwendung finden. Erfindungsgemäß ist ebenfalls denkbar, dass die optischen Elemente wenigstens einen Lichtleiter, insbesondere einen Glasfaserlichtleiter umfassen.

Eine besonders bevorzugte Ausführungsform der Erfindung zeichnet sich dadurch aus, dass die Optik ein ringsegmentartiges, beziehungsweise ein toroidales Gehäuse aufweist. Durch ein derartiges toroidales Gehäuse, das entsprechende optische Elemente beinhaltet, können die in die Einfallseite einfallenden Strahlen besonders vorteilhaft auf den Image-Chip umgelenkt werden. Der Winkel, den das ringsegmentartige Gehäuse einschließt, hängt von der Einbaulage der Leiterplatte ab.

Eine weitere, besonders bevorzugte Ausführungsform der Erfindung ergibt sich dann, wenn die Optik, beziehungsweise das Gehäuse und die optischen Elemente, derart flexibel ausgebildet ist, dass die Lage der Einfallseite der Optik relativ zu der Lage der Ausfallseite veränderbar ist. Eine derartige Überwachungseinrichtung ist sehr flexibel verwendbar, da mit lediglich ein und derselben Optik, je nach Einstellung der Lage der Einfallseite zu der Ausfallseite, der Überwachungsbereich, sprich die vor dem Fahrzeug liegende Fahrbahn, erfasst werden kann. Aufgrund der möglichen Verstellung der flexiblen Optik kann die Überwachungseinrichtung in eine große Anzahl von Fahrzeugtypen eingebaut werden, ohne dass, je nach Fahrzeugtyp, eine andere Optik bereitzustellen wäre.

Bei einer vorteilhaften Überwachungseinrichtung verläuft die photosensitive Oberfläche des Image-Chips parallel zur Bestückungsfläche der Leiterplatte. Hierdurch wird ein sehr flacher Aufbau der Überwachungseinrichtung möglich.

Außerdem kann vorgesehen sein, dass auf der Leiterplatte weitere elektrische und/oder elektronische Bauteile angeordnet sind, die die Verarbeitung und Auswertung der vom Image-Chipgenerierten Daten ermöglichen. Vorteilhafterweise wird die komplette Datenverarbeitung und Datenauswertung von Bauteilen ausgeführt, die auf der Leiterplatte angeordnet sind. Dies hat den Vorteil, dass keine weiteren Baugruppen zur Realisierung der Überwachungseinrichtung erforderlich sind.

Um ein ansprechendes Aussehen der Innenausstattung des Fahrzeuges im Bereich der Windschutzscheibe zu erreichen, wird die eingangs genannte Aufgabe auch dadurch gelöst, dass ein Dome Control Modul bereitgestellt wird, das insbesondere zur Anordnung im Bereich des inneren Rückspiegels des Fahrzeuges vorgesehen ist, welches eine erfindungsgemäße Überwachungseinrichtung aufweist.

Ein derartiges Dome Control Modul kann ferner einen Regensensor, eine Fahrzeuginnenbeleuchtung und/oder einen Fahrzeugrückspiegel umfassen.

Weitere vorteilhafte Einzelheiten und Ausgestaltungen der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: ein Fahrzeug mit einer erfindungsgemäßen Überwachungseinrichtung;
- Figur 2: eine erfindungsgemäße Überwachungseinrichtung in Seitenansicht;
- Figur 3: die Überwachungseinrichtung gemäß Figur 2 in Vorderansicht; und
- Figur 4: ein erfindungsgemäßes Dome Control Modul.

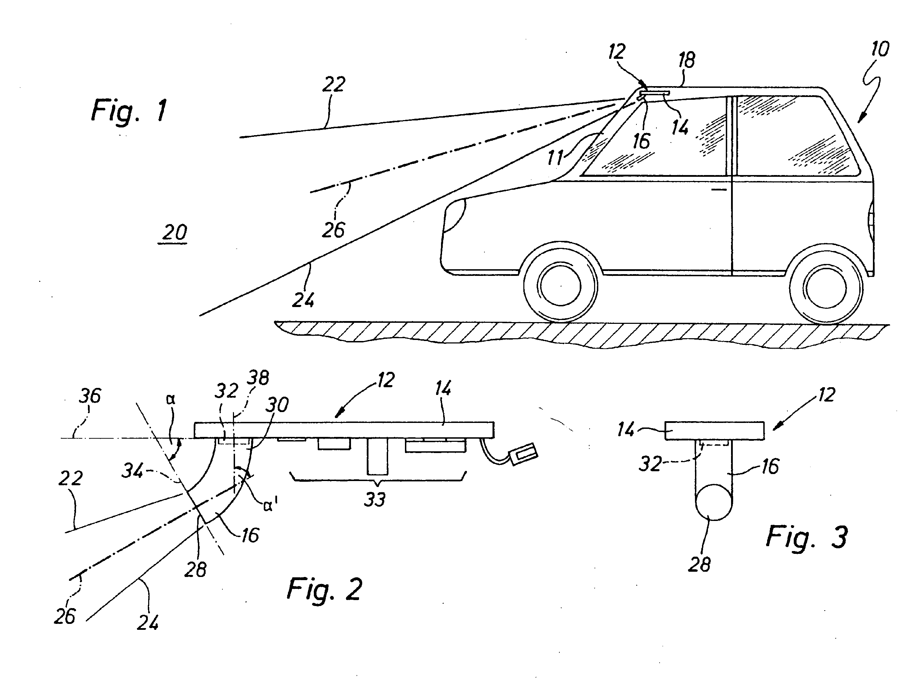

Figur 1 zeigt ein Kraftfahrzeug 10 in Seitenansicht. Im Bereich der oberen Kante der Windschutzscheibe 11 ist eine erfindungsgemäße Überwachungseinrichtung 12 angeordnet. Die Überwachungseinrichtung umfasst eine Leiterplatte 14 und eine auf der Leiterplatte 14 angeordnete Optik 16. Die Überwachungseinrichtung 12 ist so angeordnet, dass die Leiterplatte 14 weitgehend parallel zum Dach 18 des Fahrzeuges 10 verläuft. Die Optik 16 erfasst einen Überwachungsbereich 20, der in der Seitenansicht von den Linien 22, 24 begrenzt wird. Die optische Achse der Optik 16 ist in der Figur 1 mit dem Bezugszeichen 26 gekennzeichnet. Die Überwachungseinrichtung 12 überwacht die Position des Fahrzeuges 10 relativ zu einer Fahrbahn.

Wie aus den Figuren 2 und 3 deutlich wird, ist bei dem gezeigten Ausführungsbeispiel die Optik 16 toroidal, das heißt, ringsegmentartig, ausgebildet. Die Optik weist dabei eine Einfallseite 28 und eine Ausfallseite 30 auf. Auf der der Leiterplatte 14 zugewandten Seite deckt die Optik 16 einen Image-Chip 32 ab, der auf der Leiterplatte 14 angeordnet ist. Zur Datenverarbeitung und -auswertung sind auf'der Leiterplatte 14 weitere Bauteile 33 vorhanden.

Die Optik 16 ist derart ausgebildet, dass die Mittelebene 34 der Einfallseite 28 mit der Mittelebene 36 der Ausfallseite 30 einen Winkel α einschließt, der ungleich Null ist und insbesondere einen Wert zwischen 40° und 150° hat. Bei der in der Figur 2 dargestellten Ausführungsform der Erfindung beträgt der Winkel α cirka 60°, wobei die Mittelebene 36 der Ausfallseite 30 parallel zur Oberfläche des Image-Chips 32 verläuft.

Entsprechend beträgt der von der optischen Achse 26, beziehungsweise von der Haupteinfallsrichtung 26 der in die Einfallseite 28 einfallenden Strahlen, und von der senkrecht zur Oberfläche des Image-Chips 32 verlaufenden Richtung 38 eingeschlossene Winkel α' bei der dargestellten Ausführungsform cirka 60°.

Die erfindungsgemäße Überwachungseinrichtung 12 hat dabei den Vorteil, dass die Leiterplatte 14 innerhalb der Innenverkleidung, insbesondere der Dachverkleidung, des Fahrzeuges 10 angeordnet sein kann. Die Leiterplatte 14 tritt im am Fahrzeug montierten Zustand folglich nicht störend in Erscheinung. Insbesondere kann die Leiterplatte 14 weitgehend parallel zum Dach 18 des Fahrzeugs 10 montiert werden. Aufgrund der Ausbildung der Optik 16 kann die Leiterplatte 14 in der Innenausstattung des Fahrzeugs integriert angeordnet werden, wobei lediglich die Einfallseite 28 in Sichtkontakt zur Windschutzscheibe angeordnet sein muss, um den Überwachungsbereich 20 erfassen zu können. Durch die speziellen Ausgestaltung der Optik 16 werden die in die Optik 16 einfallenden Strahlen auf den Image-Chip 32 umgelenkt.

Die Optik 16 umfasst vorteilhafterweise ein Gehäuse und innerhalb des Gehäuses angeordnete optische Elemente. Bei den optischen Elementen, die in der Figur nicht dargestellt sind, kann es sich um Linsen, Prismen und/oder Spiegel handeln. Ebenfalls ist denkbar, dass die optischen Elemente Lichtleiter umfassen.

Die in der Figur dargestellte Optik 16 kann vorteilhafterweise bedingt flexibel ausgebildet sein, so dass die Lage der Einfallseite 28 relativ zu der Lage der Ausfallseite 30 beziehungsweise des Image-Chips 32 veränderbar ist. Dies hat den Vorteil, dass die Überwachungseinrichtung 12 universell für verschiedene Fahrzeugtypen Verwendung finden kann. Je nach Winkel der Windschutzscheibe, beziehungsweise je nach Anbringung der Leiterplatte 14, kann die Einfallseite 28 der Optik 16 so eingestellt werden, dass eine optimale Erfassung des Überwachungsbereichs 20 möglich ist.

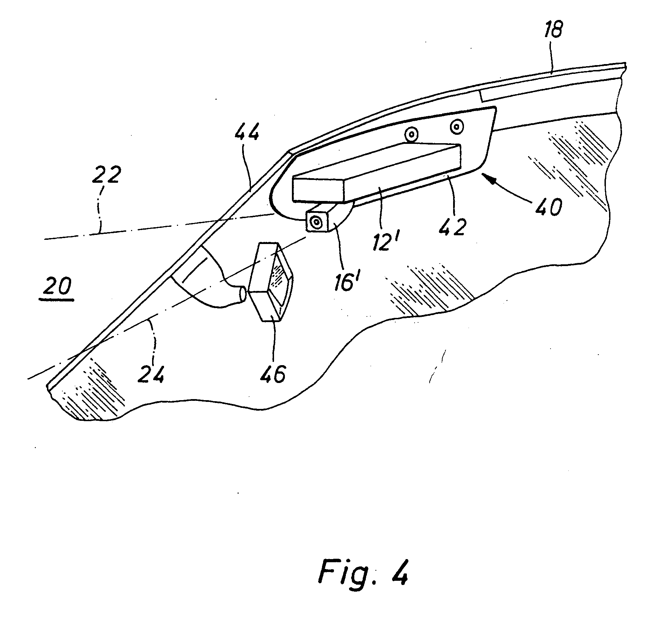

In der Figur 4 ist eine erfindungsgemäße Überwachungseinrichtung 12' dargestellt, die Teil eines Dome Control Moduls 40 ist. Das Dome Control Modul 40 ist im Bereich des inneren Rückspiegels des Fahrzeugs angeordnet. Das Dome Control Modul 40 weist ein Gehäuse 42 auf, aus dem lediglich die Optik 16' abschnittsweise derart herausragt, dass eine Erfassung des Überwachungsbereichs 20 durch die Windschutzscheibe 44 des Fahrzeugs möglich ist. Neben der Überwachungseinrichtung 12' kann das Dome Control Modul 40 beispielsweise eine Fahrzeuginnenbeleuchtung und/oder einen Regensensor und/oder Fahrzeugrückspiegel umfassen. Bei der in der Figur 4 dargestellten Ausführungsform ist ein Fahrzeugrückspiegel 46 an der Windschutzscheibe 44 angeordnet.

Die Anordnung der Überwachungseinrichtung 12' innerhalb des Dome Control Moduls 40 stellt eine Erweiterung bekannter Dome Control Module dar, ohne dass deren Funktionalität eingeschränkt wird.

## Patentansprüche

1. Überwachungseinrichtung (12, 12'), insbesondere zur Überwachung der Position eines Fahrzeuges (10) relativ zu einer Fahrbahn, mit einer Leiterplatte (14), mit einem auf der Leiterplatte (14) angeordneten Image-Chip (32) und mit einer die von einem Überwachungsbereich (20) reflektierten optischen Strahlen auf den Image-Chip (32) bündelnden Optik (16), wobei die Optik (16) eine dem Image-Chip (32) abgewandte Einfallseite (28) und eine dem Image-Chip (32) zugewandte Ausfallseite (30) aufweist, **dadurch gekennzeichnet, dass** die Mittelebene (34) der Einfallseite (28) mit der Mittelebene (36) der Ausfallseite (30) einen Winkel (α) einschließt, der ungleich Null ist.

2. Überwachungseinrichtung (12, 12'), insbesondere zur Überwachung der Position eines Fahrzeuges (10) relativ zu einer Fahrbahn, mit einer Leiterplatte (14) , mit einem auf der Leiterplatte (14) angeordneten Image-Chip (32) und mit einer die von einem Überwachungsbereich (20) reflektierten optischen Strahlen auf den Image-Chip (32) bündelnden Optik (16), wobei die Optik (16) eine dem Image-Chip (32) abgewandte Einfallseite aufweist, **dadurch gekennzeichnet, dass** die Haupteinfallsrichtung (26) der in die Einfallseite (28) einfallenden Strahlen und die senkrecht zur Oberfläche des Image-Chips (32) verlaufende Richtung (38) einen Winkel (α') einschließen, der ungleich Null ist.

3. Überwachungseinrichtung (12, 12') nach Anspruch 1 oder 2, **dadurch gekennzeichnet, dass** der Winkel (α, α') vorzugsweise zwischen 40° und 150° liegt.

4. Überwachungseinrichtung (12, 12') nach Anspruch 1, 2 oder 3, **dadurch gekennzeichnet, dass** die Optik (16) ein Gehäuse und optische Elemente umfasst.

5. Überwachungseinrichtung (12, 12') nach Anspruch 4, **dadurch gekennzeichnet, dass** die optischen Elemente ein oder mehrere Linsen, Prismen und/oder Spiegel umfassen.

6. Überwachungseinrichtung (12, 12') nach Anspruch 4 oder 5, **dadurch gekennzeichnet, dass** die optischen Elemente wenigstens einen Lichtleiter, insbesondere einen Glasfaser Lichtleiter umfassen.

7. Überwachungseinrichtung (12, 12') nach einem der vorhergehenden Ansprüche, **dadurch gekennzeichnet, dass** die Optik (16) ein ringsegmentartiges (toroidal) Gehäuse umfasst.

8. Überwachungseinrichtung (12, 12') nach einem der vorhergehenden Ansprüche, **dadurch gekennzeichnet, dass** die Optik (16), bzw. das Gehäuse und die optischen Elemente, derart flexibel ausgebildet ist, dass die Lage der Einfallseite (28) relativ zu der Lage der Ausfallseite (30), beziehungsweise zu der Oberfläche des Image-Chips (32), veränderbar ist.

9. Überwachungseinrichtung (12, 12') nach einem der vorhergehenden Ansprüche, **dadurch gekennzeichnet, dass** die photosensitive Oberfläche des Image-Chips (32) parallel zur Bestückungsfläche der Leiterplatte verläuft.

10. Überwachungseinrichtung (12, 12') nach einem der vorhergehenden Ansprüche, **dadurch gekennzeichnet, dass** auf der Leiterplatte (14) weitere elektrische und/oder elektronische Bauteile (33) angeordnet sind, die die Verarbeitung und Auswertung der vom Image-Chip (32) generierten Daten ermöglichen.

11. Dome Control Modul (40) für ein Fahrzeug, insbesondere zur Anordnung im Bereich des inneren Rückspiegel des Fahrzeuges, umfassend eine Überwachungseinrichtung (12, 12') nach einem der vorhergehenden Ansprüche

12. Dome Control Modul (40) nach Anspruch 11 umfassend außerdem einen Regensensor, eine Fahrzeuginnenbeleuchtung und/oder einen Fahrzeugrückspiegel.
